# EUROPÄISCHE PATENTSCHRIFT

(11) **EP 2 185 902 B1**
(45) Veröffentlichungstag und Bekanntmachung des Hinweises auf die Patenterteilung: **16.03.2011**
(21) Anmeldenummer: 08774274.8
(22) Anmeldetag: 25.06.2008
(51) Int. Cl.: G01F 25/00

(54) **KALIBRIERUNG VON STAUBMASSENSTROMMESS-SYSTEMEN**
CALIBRATION OF DUST LOAD FLOW MEASURING SYSTEMS
ÉTALONNAGE DE SYSTÈMES DE MESURE DE DÉBIT MASSIQUE DE POUSSIÈRE

(30) Priorität: 14.09.2007 DE 102007043907
(43) Veröffentlichungstag der Anmeldung: 19.05.2010
(73) Patentinhaber: Siemens Aktiengesellschaft, 80333 München (DE)
(72) Erfinder: TIETZE, Günter, 09599 Freiberg (DE); FISCHER, Norbert, 09638 Lichtenberg (DE); HANNEMANN, Frank, 09599 Freiberg (DE)
(86) Internationale Anmeldenummer: PCT/EP2008/058059
(87) Internationale Veröffentlichungsnummer: WO 2009/037009

(56) Entgegenhaltungen:
- EP-A- 0 454 230
- EP-A- 0 786 648
- US-A- 4 490 077
- US-A- 4 838 738

## Beschreibung

Der Anmeldungsgegenstand betrifft Verfahren zur Kalibrierung eines Staubmassenstrommess-Systems mit den Merkmalen des Anspruchs 1.

In Vergasungsanlagen muss die dem Vergasungsreaktor zugeführte Brennstoffmenge messtechnisch sehr genau erfasst werden. Das gilt insbesondere auch für Kohlenstaubdruckvergasungsanlagen mit pneumatisch arbeitenden Staubeintragsystemen. Vor der Erstinbetriebnahme derartiger Anlagen sind Funktionstests und Kalibrierversuche der eingesetzten Staubmassenstrommess-Systeme erforderlich. In bestimmten Zeitabständen sowie nach längeren Betriebsunterbrechungen sind diese Überprüfungen zu wiederholen. Wünschenswert ist die Durchführung derartiger Tests und Überprüfungen unter möglichst betriebsnahen Bedingungen. Auch im laufenden Vergasungsbetrieb sind kontinuierliche Plausibilitätsüberprüfungen der Staubmassenstrommess-Systeme sinnvoll, um das allmähliche Wegdriften der Mess-Systeme rechtzeitig zu erkennen.

Bekannt sind Vorrichtungen zur Durchführung der erforderlichen Funktionstests und Kalibrierungen unter Verwendung separater Wägebehälter. Hierbei wird aus dem Dosiergefäß des Staubeintragsystems in einen auf Wägezellen montierten Wägebehälter gefördert. So ist in der US 4 838 738 A (SALTER JAMES A [US] ET AL) 13.Juni 1989 ein Verfahren zur Kalibrierung eines Staubmassenstrommess-Systems, bei dem ein auf Wägezellen montierter Wägebehälter verwendet wird, offenbart.

Die Realisierung betriebsnaher Förderbedingungen bei Betriebsdrücken oberhalb 4 MPa (40 bar) sowie hinreichend langer Versuchszeiten sind hierbei jedoch sehr aufwendig.

Für mehrsträngige Vergasungsanlagen ist die Aufstellung mehrerer Wägebehälter regelmäßig nicht zu vermeiden.
Für die Plausibilitätsüberprüfung ermittelter Messwerte für den Staubdurchsatz ist es üblich, den Differenzdruck zwischen Dosiergefäß und Reaktor heranzuziehen. Diese Verfahrensweise liefert jedoch nur dann brauchbare Ergebnisse, wenn in den Staubförderleitungen keine veränderbaren Strömungshindernisse (z.B. Regelarmaturen) enthalten sind und ein möglichst enger Bereich der Förderdichte gewährleistet wird. Diese Methodik kann sich auch bei einem Wechsel der Kohlequalität oder bei einer Veränderung der Körnungsparameter bzw. des Feuchtegehalts des Vergasungsstaubs als nicht oder nur eingeschränkt brauchbar erweisen. Nachteilig hierbei ist, dass für die Plausibilitätsüberprüfung der Staubmassenstrommessung auf Messwerte zurückgegriffen werden muss, die auch in die Staubmassenstrommessung selbst einfließen.

Der Erfindung liegt das Problem zugrunde, ein Verfahren zur Kalibrierung eines Staubmassenstrommess-System für eine Brennstaub-Vergasungseinrichtung zu schaffen, das eine hohe Genauigkeit im Vergasungsbetrieb mit sich bringt.

Das Problem wird durch ein Verfahren nach Anspruch 1 gelöst.

Die Erfindung umfasst die Nutzung einer von mehreren ohnehin erforderlichen Eintragschleusen des Staubeintragsystems als Empfangsbehälter für die bei Funktionstests und Kalibrierungen der Staubmassenstrommesstechnik notwendigen Förderversuche.
Dazu ist die hierfür vorgesehene Eintragschleuse mit Wägezellen WG ausgestattet. Für die Durchführung der Kalibrierungen sind ferner Vorkehrungen für eine vollständige kräftemäßige Entkopplung der betreffenden Eintragschleuse im Stahlbau zu treffen. Zur Ableitung des Fördergases aus der Schleuse ist weiterhin eine geeignete Filtereinrichtung vorgesehen, die die Entstaubung des abzuleitenden Fördergases unter Druckbedingungen gestattet. Das entstaubte Fördergas wird über ein Regelventil abgeleitet, welches gleichzeitig für die Regelung des Differenzdrucks zwischen Dosiergefäß und Empfangsbehälter/Schleuse genutzt werden kann. Der Betriebsdruck im Dosiergefäß wird in diesem Falle konstant gehalten. Alternativ hierzu kann eine konstante Absolutdruckregelung im Empfangsbehälter/Schleuse erfolgen und die Differenzdruckregelung durch eine geregelte Gaszu- bzw. -abführung in bzw. aus dem Dosiergefäß realisiert werden. Die hierfür erforderliche Regelung ist für die Inbetriebnahme des Systems ohnehin notwendig.
Ein weiteres erfindungsgemäßes Merkmal besteht darin, dass die bisher üblicherweise angewandte Plausibilitätskontrolle der Staubmassenstrommessung im Vergasungsbetrieb mittels der Bewertung des Differenzdrucks zwischen Dosiergefäß und Reaktor durch eine Kohlenstoffbilanz über den Vergasungsprozess ergänzt oder ersetzt wird

Die Erfindung nutzt eine der ohnehin erforderlichen Eintragschleusen des Staubeintragsystems als Empfangsbehälter bei den Förderversuchen, die bei Funktionstests und für die Kalibrierung der Staubmassenstrommess-Systeme in Vergasungsanlagen mit pneumatisch arbeitenden Staubeintragsystemen unumgänglich sind.

Die Vorteile bestehen darin, dass erforderliche Funktionstests und Kalibrierversuche in Staubeintragsystemen von Vergasungsanlagen mit nur geringem zusätzlichen Aufwand unter betriebsnahen Förderbedingungen und mit ausreichend langer Versuchsdauer durchgeführt werden können.
Bei Plausibilitätsüberprüfungen der Staubmassenstrommessungen im laufenden Vergasungsbetrieb können Auswirkungen störender Einflussgrößen, die sich auf den Druckverlust in den Förderleitungen auswirken, vermindert bzw. ausgeschlossen werden, indem eine Kohlenstoffbilanzierung über den Vergasungsreaktor einbezogen wird. Das betrifft Einflussgrößen wie veränderte Förderbedingungen (Strömungsgeschwindigkeit; Förderdichte), veränderliche Strömungshindernisse (z.B. Regelarmaturen) oder Kohlenstaubparameter (Feuchte, Körnungsaufbau, Reindichte u.ä.).

Die Erfindung wird im Folgenden als Ausführungsbeispiel in einem zum Verständnis erforderlichen Umfang anhand einer Figur näher erläutert. Dabei zeigt:

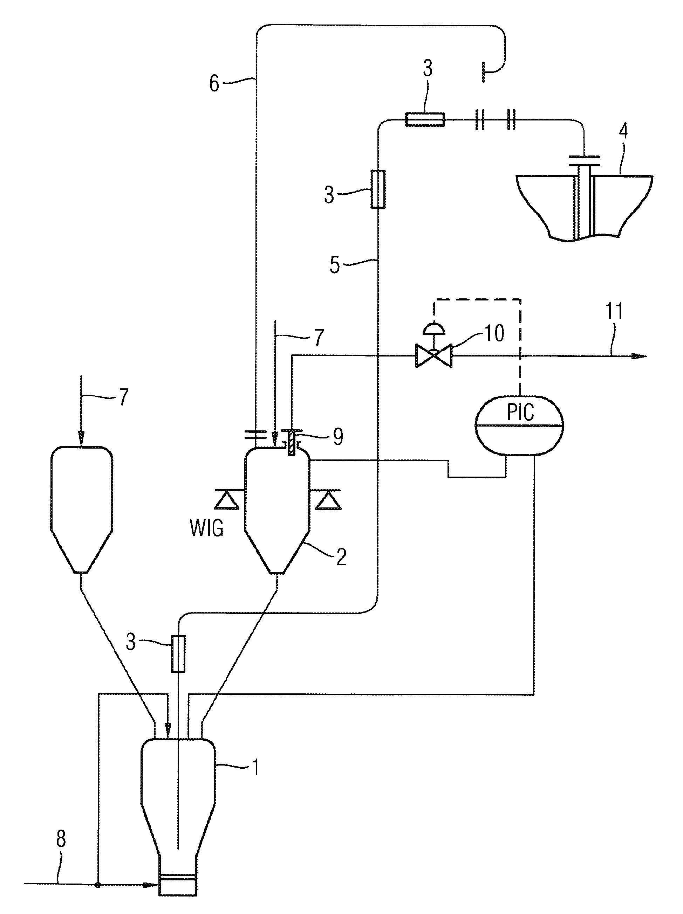

Fig. 1 ein Ausführungsbeispiel für die Durchführung von Funktionstests der Staubförderung und Kalibrierungen der Staubmassenstrommesstechnik im Staubeintragsystem einer Vergasungsanlage.

Die vom Dosiergefäß (1) zum Vergasungsreaktor (4) führende Staubförderleitung (5) wird im Anschluss an die installierte Staubmassenstrommess- und Überwachungstechnik (3) auf die zu einer Eintragschleuse (2) führende Kalibrierleitung (6)umgebunden. Die Staubförderleitung (5) ist also in Förderrichtung hinter der installierten Staubmassenstrommess- und Überwachungstechnik (3) anstelle des Vergasungsreaktors mit der zu der Eintragschleuse (2) führenden Kalibrierleitung (6)verbindbar. Diese Eintragschleuse (2) ist mit Wägezellen ausgestattet und kräftemäßig entkoppelt im Stahlanbau angeordnet. Ferner wird die Eintragschleuse zur Durchführung der Tests mit einer Filtereinrichtung (9) zur Entstaubung des abzuführenden Fördergases (11) unter Druckbedingungen von z.B. 4 MPa (40 bar) oder höher ausgerüstet. Die Ableitung des entstaubten Fördergases erfolgt über eine Differenzdruckregelung (10) zwischen Dosiergefäß und Eintragschleuse. Das Dosiergefäß arbeitet hierbei mit konstantem Betriebsdruck. Durch Variation des Differenzdrucks zwischen Dosiergefäß und Eintragschleuse wird der im jeweiligen Test angestrebte Staubmassenstrom eingestellt. Dies erfolgt analog zur Einstellung des Staubmassenstroms im Vergasungsbetrieb durch die Regelung des Differenzdrucks zwischen Dosiergefäß und Vergasungsreaktor.

Auf die beschriebene Art und Weise kann die Staubförderung sowie die Staubmassenstrommess- und -überwachungstechnik in sämtlichen Staubförderleitungen einer Vergasungsanlage getestet bzw. kalibriert werden.

Nach Entleerung des Staubinhalts der Eintragschleuse (2) in das Dosiergefäß (1) können die Tests beliebig oft wiederholt werden.

## Patentansprüche

1. Verfahren zur Kalibrierung eines Staubmassenstrommess-Systems demzufolge
- die von einem Dosiergefäß (1) zum Vergasungsreaktor (4) führende Staubförderleitung (5) in Förderrichtung hinter der installierten Staubmassenstrommess- Einrichtung (3) anstelle mit dem Vergasungsreaktor mit einer zu der Eintragschleuse (2) führenden Kalibrierleitung (6)verbindbar ist,
- die Eintragschleuse mit einer Wägeeinrichtung (WG) ausgestattet ist, derart, dass die Masse des Inhalts der Eintragschleuse ermittelbar ist,
- ein vorgegebener Differenzdruck (PIC) zwischen Dosiergefäß und Eintragschleuse geregelt wird,
- aus dem vorgegebenen Differenzdruck und der Änderung der Masse in der Eintragschleuse in einem Zeitintervall der Staubmassenstrom ermittelbar ist.

2. Verfahren nach Anspruch 1
**dadurch gekennzeichnet, dass**
die Staubförderleitung (5) in Förderrichtung hinter der installierten Staubmassenstrommess- Einrichtung (3) mit dem Vergasungsreaktor verbunden wird und der ermittelte Staubmassenstrom nach Maßgabe des vorgegebenen Differenzdrucks zwischen Dosiergefäß und Vergasungsreaktor in den Vergasungsreaktor gefördert wird.

3. Verfahren nach einem der vorstehenden Ansprüche
**dadurch gekennzeichnet, dass**
der Betriebsdruck im Dosiergefäß konstant gehalten wird.

4. Verfahren nach Anspruch 3
**dadurch gekennzeichnet, dass**
der vorgegebene Differenzdruck (PIC) zwischen Dosiergefäß und Eintragschleuse durch Regelung (10) der Ableitung des Fördergases aus der Eintragschleuse erfolgt.

5. Verfahren nach Anspruch 4
**dadurch gekennzeichnet, dass**
das abgeleitete Fördergas aus der Eintragschleuse gefiltert (9) wird.

6. Verfahren nach Anspruch 1 bis 2
**dadurch gekennzeichnet, dass**
im Empfangsbehälter auf konstanten Absolutdruck geregelt wird.

7. Verfahren nach Anspruch 6
**dadurch gekennzeichnet, dass**
der vorgegebene Differenzdruck (PIC) zwischen Dosiergefäß und Eintragschleuse durch eine Gaszu- bzw. -abführung in bzw. aus dem Dosiergefäß geregelt wird.

8. Verfahren nach Anspruch 2 bis 7
**dadurch gekennzeichnet, dass**
im laufenden Vergasungsbetrieb die Überschreitung einer Abweichung zwischen dem nach Maßgabe des eingestellten Differenzdrucks geförderten Staubmassenstrom einerseits und einer Kohlenstoffbilanzierung über den Vergasungsreaktor andererseits ausgewertet wird.

## Claims

1. Method for calibrating a dust load flow measuring system, according to which
- the dust delivery line (5) leading from a metering vessel (1) to the gasification reactor (4) can be connected in the delivery direction downstream of the installed dust load flow measuring facility (3) to a calibration line leading to the input sluice (6) instead of the gasification reactor,
- the input sluice is provided with a weighing facility (WG), such that the load of the content of the input sluice can be determined,
- a predetermined differential pressure (PIC) is controlled between the metering vessel and the input sluice,
- the dust load flow can be determined in a time interval from the predetermined differential pressure and the change in the load in the input sluice.

2. Method according to claim 1,
**characterised in that**
the dust delivery line (5) is connected to the gasification reactor in the delivery direction downstream of the installed dust load flow measuring facility (3) and the determined dust load flow is delivered into the gasification reactor according to the predetermined differential pressure between the metering vessel and the gasification reactor.

3. Method according to one of the preceding claims,
**characterized in that**
the operating pressure in the metering vessel is kept constant.

4. Method according to claim 3,
**characterised in that**
the predetermined differential pressure (PIC) between the metering vessel and the input sluice takes place by controlling (10) the dissipation of the delivery gas from the input sluice.

5. Method according to claim 4,
**characterised in that**
the dissipated delivery gas is filtered out of the input sluice (9).

6. Method according to claim 1 to 2, **characterized in that** a constant absolute pressure is regulated in the receiving container.

7. Method according to claim 6,
**characterised in that**
the predetermined differential pressure (PIC) between the metering vessel and the input sluice is regulated by means of a gas supply and/or discharge in and/or out of the metering vessel.

8. Method according to claim 2 to 7,
**characterised in that**
during the gasification operation, the exceeding of a deviation between the dust load flow delivered according to the set differential pressure on the one hand and a carbon balancing on the other hand is evaluated by way of the gasification reactor.

## Revendications

1. Procédé d'étalonnage d'un système de mesure de débit massique de poussière, selon lequel:
- la conduite de transport de poussière (5) menant d'un récipient doseur (1) au réacteur de gazéification (4) peut être reliée, dans le sens du transport en aval du dispositif installé (3) de mesure de débit massique de poussière, à une conduite d'étalonnage (6) menant au sas de chargement (2), au lieu d'être relié audit réacteur de gazéification,
- ledit sas de chargement est équipé d'un dispositif de pesée (WG) de telle manière que la masse du contenu du sas de chargement puisse être déterminée,
- une pression différentielle prédéterminée (PIC) est réglée entre récipient doseur et sas de chargement,
- le débit massique de poussière peut être déterminé à partir de ladite pression différentielle prédéterminée et la variation de la masse dans le sas de chargement pendant un intervalle de temps.

2. Procédé selon la revendication 1,
**caractérisé en ce que**
la conduite de transport de poussière (5) est reliée, dans le sens du transport en aval du dispositif installé (3) de mesure de débit massique de poussière, au réacteur de gazéification, et le débit massique de poussière déterminé est transporté dans ledit réacteur de gazéification conformément à la pression différentielle prédéterminée entre récipient doseur et réacteur de gazéification.

3. Procédé selon l'une des revendications précédentes,
**caractérisé en ce que**
la pression de service est maintenue constante dans le récipient doseur.

4. Procédé selon la revendication 3,
**caractérisé en ce que**
la pression différentielle prédéterminée (PIC) entre récipient doseur et sas de chargement est obtenue par réglage (10) de l'évacuation du gaz transporteur hors du sas de chargement.

5. Procédé selon la revendication 4,
**caractérisé en ce que**
le gaz transporteur évacué est éliminé par filtration (9) du sas de chargement.

6. Procédé selon la revendication 1 à 2,
**caractérisé en ce qu'**une pression absolue constante est réglée dans le conteneur de réception.

7. Procédé selon la revendication 6,
**caractérisé en ce que**
la pression différentielle prédéterminée (PIC) entre récipient doseur et sas de chargement est réglée par une amenée/évacuation de gaz dans/hors du récipient doseur.

8. Procédé selon la revendication 2 à 7,
**caractérisé en ce que**
pendant l'opération de gazéification en cours, on évalue le dépassement d'un écart entre le débit massique de poussière transporté conformément à la pression différentielle réglée d'une part et un bilan carbone établi à travers le réacteur de gazéification d'autre part.
